# FASCICULE DE BREVET EUROPEEN

(11) **EP 3 254 091 B1**
(45) Date de publication et mention de la délivrance du brevet: **17.06.2020**
(21) Numéro de dépôt: 16702561.8
(22) Date de dépôt: 02.02.2016
(51) Int. Cl.: G01N 23/04

(54) **DISPOSITIF DE CONTRÔLE NON DESTRUCTIF DE STRUCTURES PAR GAMMAGRAPHIE**
VORRICHTUNG ZUR ZERSTÖRUNGSFREIEN PRÜFUNG VON STRUKTUREN DURCH GAMMAGRAPHIE
DEVICE FOR NONDESTRUCTIVELY TESTING STRUCTURES BY GAMMAGRAPHY

(30) Priorité: 02.02.2015 FR 1550805
(43) Date de publication de la demande: 13.12.2017
(73) Titulaire: Institut de Soudure, 93420 Villepinte (FR)
(72) Inventeur: BLETTNER, Alexis, 60150 Thourotte (FR)
(74) Mandataire: Regimbeau
(86) Numéro de dépôt international: PCT/EP2016/052191
(87) Numéro de publication internationale: WO 2016/124602

(56) Documents cités:
- WO-A1-2011/023960
- CN-A- 101 655 467
- GB-A- 1 219 837
- GB-A- 2 159 378
- JP-U- S5 860 900

## Description

### DOMAINE GENERAL

L'invention se rapporte au domaine du contrôle non destructif de structures telles que des tuyauteries.

L'invention porte plus particulièrement sur un dispositif et un procédé de gammagraphie.

### ETAT DE L'ART

La gammagraphie est un procédé très largement utilisé, notamment en France, pour contrôler de façon non destructive la qualité d'une structure.

La gammagraphie procède de la façon suivante : des rayonnements ionisants sont émis par une source radioactive sur la surface de la structure à analyser, et après réflexion sur celle-ci sont projetés sur un film radiographique.

L'inconvénient majeur de l'emploi de la gammagraphie réside dans les risques occasionnés par les rayonnements ionisants qui imposent la mise en place d'un périmètre de sécurité contraignant pour l'exploitant ou qui nécessitent d'avoir recours à des travaux en horaire décalé, ce qui génère des coûts indirects importants.

Les contraintes réglementaires sont par ailleurs de plus en plus exigeantes en termes de transport, stockage et administration des sources radioactives, ce qui rend toujours plus complexe leur emploi en conditions industrielles et conduit à des coûts de mise en œuvre de plus en plus élevés.

La réglementation applicable lors de l'examen d'une pièce ou d'un objet à l'aide d'un appareil mobile émetteur de rayonnements ionisants impose la délimitation d'une zone d'opération matérialisée par un balisage particulièrement contraignante.

On connaît du document WO 2011/023960 A1 un dispositif de gammagraphie comprenant un boîtier présentant un orifice de tir pour émettre à l'extérieur du boitier un rayonnement, et une cerce de maintien pour enserrer une structure à analyser. Le boîtier est monté sur un chariot motorisé mobile autour de la cerce sur des rails s'étendant autour de la cerce. En déplaçant le chariot le long des rails autour de la cerce, l'orifice de tir peut être positionné en différents positions angulaires autour de la cerce.

Toutefois, le dispositif décrit dans le document WO 2011 /023960 A1 a pour inconvénient que le chariot motorisé est configuré pour se déplacer au cours de l'émission d'un rayonnement vers la structure à analyser. Dans ce cas, les motifs projetés sur le film radiographique sont alors brouillés, et des éventuels défauts présents sur la structure sont ainsi moins précisément localises sur la base du film radiographique.

Les documents GB 2 159 378 A et JP S58 60900 U divulguent des dispositifs de gammagraphie comprenant un boîtier, une cerce et des moyens de fixation pour fixer le boîtier en des positions angulaires prédéterminées autour de la cerce.

### PRESENTATION DE L'INVENTION

L'invention vise à améliorer la protection d'un opérateur chargé de mettre en œuvre un contrôle non destructif d'une structure par gammagraphie utilisant des rayonnements ionisants, sans pour autant dégrader la précision du contrôle non destructif mis en œuvre.
Il est à cet égard proposé un dispositif de gammagraphie comprenant :
- un boîtier présentant un orifice de tir pour émettre à l'extérieur du boitier un rayonnement ionisant,
- une cerce de maintien pour enserrer une structure à analyser,
- des moyens de fixation amovible du boîtier à la cerce comprenant plusieurs éléments de fixation pour fixer le boîtier en des positions angulaires prédéterminées et différentes autour de la cerce, l'orifice de tir étant agencé pour diriger le rayonnement ionisant sur la structure lorsqu'elle est enserrée par la cerce et que le boîtier est fixé à la cerce par un des éléments de fixation.

Le dispositif ici proposé est fixé à la structure à analyser, et ce par l'intermédiaire de la cerce de maintien. La distance entre l'orifice de tir et la surface à analyser se trouve donc réduite. Les risques d'entrée d'une partie du corps d'un opérateur dans le champ de rayonnement entre l'orifice de tir et la structure lorsque cette dernière est enserrée par la cerce sont donc significativement réduits.

De plus, les multiples éléments de fixation permettent de positionner l'orifice de tir successivement en différents positions angulaires autour de la cerce. Le dispositif proposé peut donc mettre en œuvre un contrôle non destructif du pourtour d'une structure, pour une quantité de rayonnement ionisant émise relativement limitée. Le dispositif proposé est dès lors particulièrement avantageux pour le contrôle de canalisations, typiquement de formes tubulaires.

De plus, grâce aux multiples éléments de fixation, il est garanti que l'orifice de tir peut être positionné de façon parfaitement fixe par rapport à la cerce, et donc par rapport à la structure à analyser lorsque la cerce enserre cette structure. De la sorte, un rayonnement peut être émis vers une portion bien précise de la structure à analyser. Les éventuels défauts présents sur la structure sont ainsi plus précisément localisés par la gammagraphie mise en œuvre au moyen du dispositif.

Les éléments de fixation font saillie depuis une surface radialement extérieure de la cerce, et les moyens de fixation comprennent en outre :
- une platine solidaire du boîtier comprenant une entaille pour recevoir l'un quelconque des éléments en saillie,
- un élément de blocage de la platine par rapport à l'élément en saillie reçu dans l'entaille.

Par ailleurs,
- au moins un des éléments en saillie peut comprendre un passage traversant,
- la platine peut comprendre un passage traversant interrompu par l'entaille et agencé pour être aligné avec le passage traversant de l'élément en saillie lorsque cet élément est reçu dans l'entaille,
L'élément de blocage de la platine par rapport à l'élément en saillie est une goupille comprenant une tige adaptée pour traverser les passages alignés de la platine et de l'élément de fixation lorsque cet élément est reçu dans l'entaille. La goupille peut comprendre :
- au moins une bille mobile entre une position rétractée dans la tige, et une position en saillie par rapport à la tige dans laquelle la bille bloque la tige en travers du passage de la platine.
- un mécanisme d'actionnement de la bille comprenant un bouton, et adapté pour rétracter la bille dans la tige en réponse à un appui sur le bouton, et solliciter la bille vers sa position en saillie lorsque le bouton n'est pas appuyé, le bouton étant par exemple formé sur une partie de préhension de la goupille

Chaque élément de fixation peut présenter deux côtés opposés s'étendant parallèlement à un axe de référence autour duquel s'étend la cerce, le passage traversant de l'élément de fixation débouchant dans les deux côtés opposés.

L'écart de position angulaire entre chaque paire d'éléments de fixation adjacents peut être constant.

Deux à huit éléments de fixation peuvent être prévus sur la cerce.

La cerce peut comprendre deux parties définissant ensemble une forme globalement annulaire, et une liaison articulée entre les deux parties.

Les deux parties de la cerce peuvent être en métal.

La cerce peut comprendre en outre une grenouillère d'attache de l'une des parties à l'autre partie.

La grenouillère peut comprendre un levier monté mobile par rapport à l'une des parties de support, et une tête d'attache à l'autre partie de support montée mobile par rapport au levier, la tête d'attache étant de longueur réglable.

Le boîtier peut également comprendre au moins l'un des éléments suivants : au moins un un écran contre des rayonnement ionisants, un collimateur du rayonnement ionisant généré par la source pour produire un faisceau focalisé de rayons ionisant vers l'orifice de tir.

Le dispositif de gammagraphie peut également la source de rayonnement gamma. Cette source de rayonnement peut être contenue dans un embout d'irradiation amovible par rapport au boîtier.

Le dispositif de gammagraphie peut également un film radiographique agencé pour recevoir le rayonnement ionisant après sa pénétration dans la structure enserrée par la cerce.

L'invention concerne également un procédé de gammagraphie lequel est mis en œuvre avec le dispositif qui précède. Ce procédé comprend les étapes suivantes:
- fixation de la cerce de maintien autour d'une structure à analyser,
- fixation, au moyen d'un des éléments de fixation, du boîtier à la cerce en une position angulaire prédéterminée autour de la cerce,
- émission via l'orifice de tir d'un rayonnement ionisant généré par une source vers la surface de la structure fixée à la cerce, alors que le boîtier est fixé à la cerce en la position angulaire prédéterminée,
les étapes de fixation du boîtier à la cerce et d'émission étant répétées pour plusieurs positions angulaires prédéterminées différentes autour de la cerce.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- Les figures 1 et 2 sont des vues en trois dimensions d'un embout d'irradiation, d'un boîtier de collimation et d'une cerce de maintien constituant des pièces d'un dispositif de gammagraphie selon un mode de réalisation de l'invention.
- La figure 3 est une vue de côté d'un embout d'irradiation selon un mode de réalisation de l'invention, faisant partie du dispositif partiellement représenté sur les figures 1 et 2.
- La figure 4 est une vue schématique de dessous d'une platine comprise dans le dispositif partiellement représenté sur les figures 1 et 2, selon un mode de réalisation de l'invention.
- La figure 5 représente un système de fermeture d'une cerce de maintien constituant une pièce du dispositif de gammagraphie et représentée sur les figures 1 et 2.
- La figure 6 est une vue de côté d'une goupille de blocage faisant également partie du dispositif de gammagraphie des figures 1 et 2.

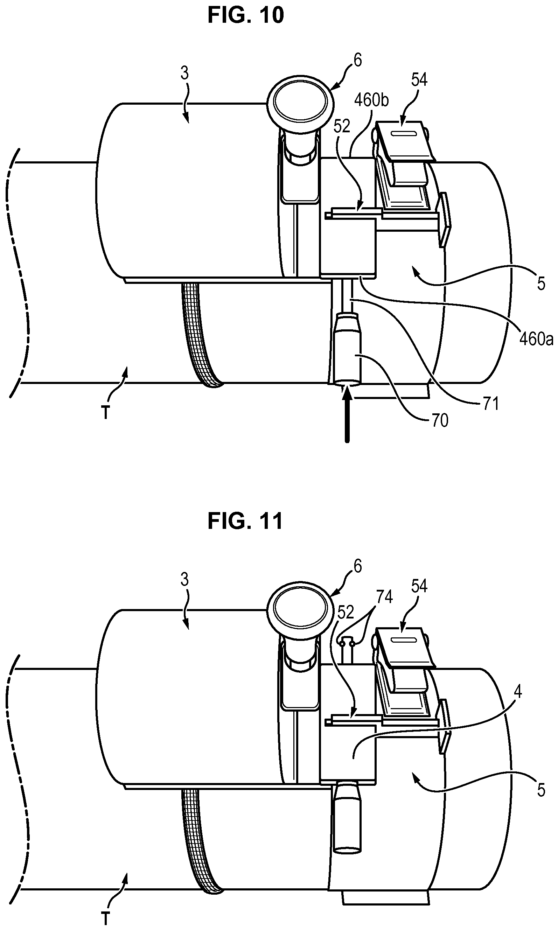

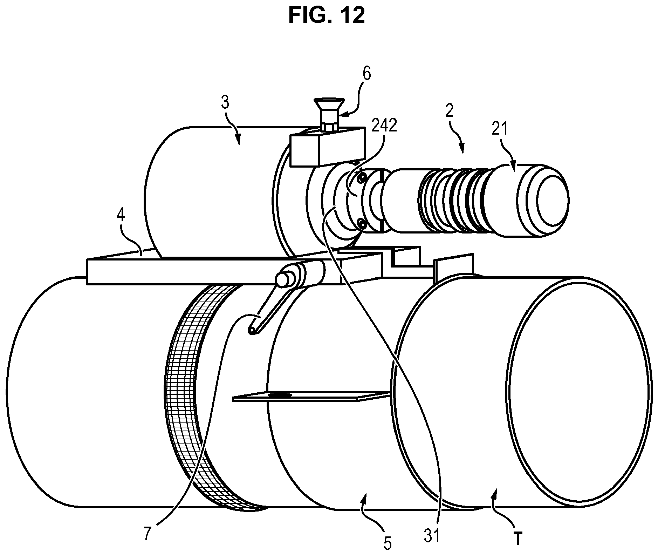

- Les figures 7 à 12 représentent le dispositif dans différents états au cours de sa fixation à une structure à analyser.
Sur l'ensemble des figures, les éléments similaires portent des références identiques.

### DESCRIPTION D'UN MODE DE REALISATION DE L'INVENTION

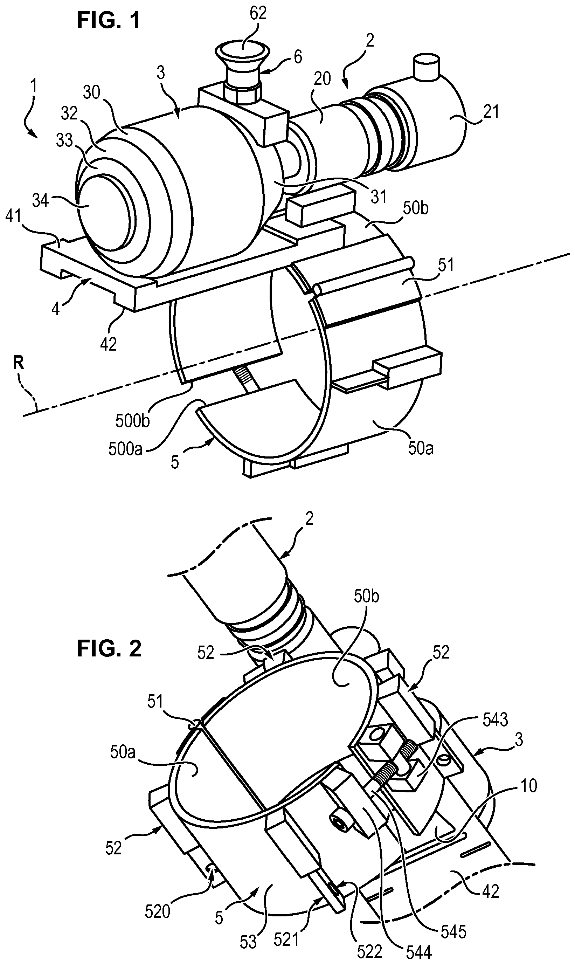

En référence aux **figures 1 et 2**, un dispositif de gammagraphie 1 de proximité comprend un dispositif de tir.

Le dispositif de tir comporte notamment un orifice de tir 10 pour émettre un rayonnement ionisant vers une surface à analyser et recevoir le rayonnement après sa réflexion sur cette surface, afin d'en caractériser le profil et notamment y localiser des éventuels défauts.

Le dispositif de tir comprend deux parties : un embout d'irradiation 2 et un boîtier de collimation 3.

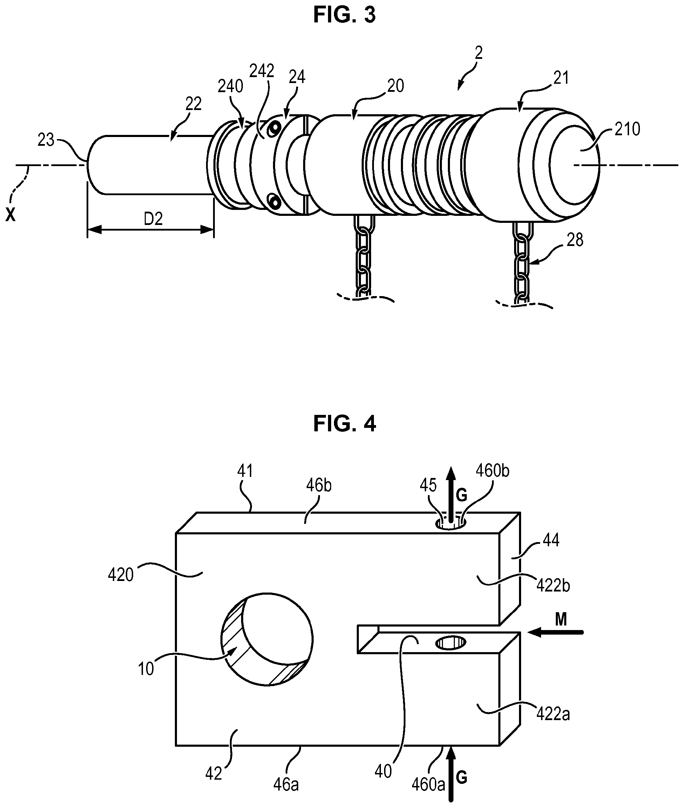

En référence à la **figure 3**, L'embout d'irradiation 2 comprend une source 20 génératrice de rayonnement ionisant. La source 20 de rayonnement gamme est par exemple une source de Sélénium 75 (Se⁷⁵) ou d'Iridium 192 (Ir¹⁹²).

L'embout d'irradiation 2 comprend un corps dans lequel est logée la source 20.

Le corps de l'embout d'irradiation s'étend le long d'un axe longitudinal X ; il comprend successivement le long de cet axe une partie proximale de préhension 21 et une partie distale 22.

La partie distale 22 présente une extrémité distale où est formé un orifice de sortie 23 pour diffuser un rayonnement ionisant généré par la source 20 logée à l'intérieur de l'embout 2.

La partie distale 22 présente une forme cylindrique suivant l'axe longitudinal X destinée à être insérée dans le boîtier de collimation 3. La partie distale 22 est par exemple tubulaire.

L'embout d'irradiation comprend en outre une bague de blocage 24 montée autour de la partie distale 22.

La bague de blocage 24 comprend une surface radialement extérieure libre. Est défini dans l'épaisseur de la bague mesurée radialement par rapport à l'axe longitudinal X au moins une cavité 240 débouchant dans la surface radialement extérieure. Cette cavité 240 présente la forme d'une rainure s'étendant sur tout le pourtour de la bague 24 autour de l'axe longitudinal X.

La bague de blocage 24 est agencée à une distance D2 de l'orifice de sortie 23.

La bague de blocage 24 peut être fixe par rapport à la partie distale 22 ou bien monté coulissante sur la partie distale 22 parallèlement à l'axe longitudinal X, de façon à faire varier la distance D2 qui sépare la bague 24 de l'orifice de sortie 23.

Pour une source 20 de type Se⁷⁵, la distance D2 entre l'orifice d'émission et la bague de blocage est typiquement choisie égale à 34 millimètres. Pour une source 20 de type Ir¹⁹², la distance D2 entre l'orifice d'émission et la bague de blocage est typiquement choisie égale à 36,5 millimètres.

La bague de blocage 24 comprend en outre une collerette 242 constituant une butée limitant la course d'insertion de l'embout 2 dans le boîtier 3. La cavité 240 est positionnée entre la collerette 242 et l'orifice de sortie 23.

La partie proximale 21 comprend en outre un revêtement 210 en plastique de dimensions adaptées pour être saisie entre l'index et le pouce.

L'embout d'irradiation 2 comprend en outre une chaînette 28 comprenant un ou deux extrémités attachées à la partie proximale 21 à l'aide de moyens appropriés.

De retour aux figures 1 et 2, le boîtier de collimation 3 comprend un orifice d'entrée 31, un collimateur 30, et l'orifice de tir 10.

Le collimateur 30 est adapté pour focaliser un faisceau de rayons ionisants en provenance de l'orifice d'entrée 31, et de rediriger ce faisceau focalisé vers l'orifice de tir 10 vers l'extérieur du boîtier de collimation 3.

Le boîtier de collimation 2 comprend également des écrans absorbants 33 adaptés pour limiter l'émission de rayonnement ionisant à travers les parois du boîtier 3, depuis l'intérieur du boîtier de collimation 3 vers l'extérieur du boîtier de collimation 3.

L'orifice de tir 10 (visible sur la figure 2) est destiné à être placé en regard de la surface d'une structure à analyser.

Le boîtier de collimation 2 comprend un logement se terminant par l'orifice d'entrée 31. Le logement est de dimensions adaptées pour recevoir la partie distale 22 de l'embout d'irradiation 2 y compris la partie de la bague de blocage 24 ; on qualifiera dans la suite ce logement de « logement d'insertion » de l'embout d'irradiation 2 dans le boîtier de collimation 3.

Le logement d'insertion est en communication optique avec le collimateur 30 de sorte qu'un rayonnement émis par l'orifice d'entrée 31 puisse être focalisé par le collimateur 30.

Le dispositif 1 comprend en outre des moyens de fixation amovible de l'embout d'irradiation 2 au boîtier 3.

Les moyens de fixation amovible de l'embout d'irradiation 2 au boîtier de collimation 3 comprennent un verrou 6 monté mobile par rapport au boîtier de collimation 3, et la bague de blocage 24 présentant la cavité 240.

Le verrou 6 présente une partie de préhension 62, faisant saillie par rapport au boîtier 3 à l'extérieur de celui-ci (visible sur les figures 1 et 2).

Le verrou 6 comprend en outre une tige solidaire de la partie de préhension 62 et qui traverse une paroi du boîtier 3 débouchant dans le logement d'insertion de l'embout 2 d'irradiation (non visible sur les figures 1 et 2).

La tige du verrou 6 est mobile en translation suivant un axe transversal à un axe d'insertion de l'embout dans le logement d'insertion par l'orifice d'entrée 31. La tige du verrou 6 est mobile le long d'un axe perpendiculaire à l'axe longitudinal X de l'embout 2 lorsque ce dernier est inséré dans le logement du boîtier 3.

La tige présente une extrémité distale (non-illustrée) de dimensions adaptées pour être reçue dans la cavité 240 formée dans la bague de blocage 24. La tige est plus précisément mobile entre une position rétractée dans laquelle l'extrémité distale de la tige fait saillie dans le logement d'insertion de l'embout d'irradiation 2, et une position dans laquelle la tige ne fait pas saillie dans ce logement. Le verrou 6 peut comprendre en outre des moyens de rappel de la tige vers sa position rétractée (par exemple un ressort agissant en compression monté autour de la tige).

Le boîtier de collimation 2 comprend en outre une platine 4, solidaire de celui-ci.

La platine 4 est dans l'exemple de réalisation illustré sur les figures une pièce métallique indépendante rapportée sur un corps qui comprend le collimateur 30 et d'autre part l'orifice d'entrée. En variante, la platine 4 est une simple paroi du boîtier de collimation 2.

En référence à la **figure 4**, la platine 4 présente une surface interne 41 orientée vers le collimateur 30 et une surface libre 42 opposée à la surface interne 41, la surface libre 42 étant destinée à être positionnée en regard de la surface d'une structure à analyser.

Dans la suite, on définit l'épaisseur de la platine comme la dimension de la platine mesurée entre la surface interne 41 et la surface libre 42.

La platine 4 est de forme globalement parallélépipédique.

L'orifice de tir 10 est formé dans la surface libre de la platine 4. La platine 4 est ainsi percée entre sa surface interne 41 et sa surface libre 42 d'un passage en communication optique avec le collimateur et se terminant par l'orifice de tir 10 formé dans la surface libre 42.

La platine 4 comprend en outre une entaille 40 débouchant dans la surface externe 42.

L'entaille 40 débouche également dans la surface interne 41, conférant ainsi à la platine 4 une forme globalement en « U ». La platine 4 comprend une embase 420 depuis laquelle s'étendent deux parois 422a et 422b définissant les branches de ce « U ».

L'orifice de tir 10 est localisé dans l'embase 420.

L'entaille 40 interrompt par ailleurs un côté latéral 44 de la platine 4 reliant ensemble les surfaces interne 41 et externe 42. Ce côté latéral 44 est formé par les extrémités libres des deux branches 422a et 422b.

Il est de la sorte possible d'introduire un objet dans l'entaille 40 selon une direction sensiblement parallèle à la surface externe 42, par le côté latéral 44, et plus précisément via l'espace laissé entre les extrémités libres des deux parois 422a et 422b (suivant la direction donnée par la flèche M).

Les deux branches 422a et 422b sont parallèles entre elles et distantes l'une de l'autre par l'entaille 40 selon un écart constant. Un objet présentant la forme d'un élément de fixation rectiligne peut ainsi être introduit entre les deux branches 422a et 422b.

La platine 4 est en outre est percée d'un passage 45 traversant, qui coupe l'entaille 40 transversalement à celle-ci.

Le passage s'étend par exemple perpendiculairement à une direction d'insertion d'un objet dans l'entaille 4 via le côté latéral 44.

Le passage 45 est confiné entre la surface interne 41 et la surface libre 42 de la platine 4 et se termine par un premier orifice 460a formé dans un premier côté latéral 46a de la platine 4, se termine également par un deuxième orifice 460b formé dans un deuxième côté latéral 46b opposé au premier côté 46a, le premier côté 46a et le deuxième côté 46b reliant chacun la surface interne 41 à la surface libre 42.

Le passage 45 est formé plus précisément par deux conduits transversaux formés dans l'épaisseur des deux branches 422a, 422b, les deux conduits étant alignés et séparés par l'entaille 40.

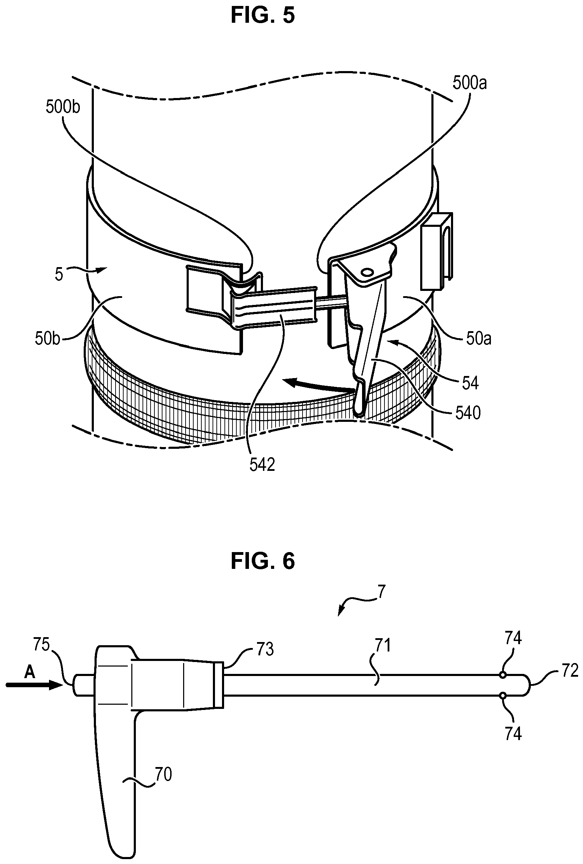

De la sorte, une tige insérée par exemple dans l'orifice 460a suivant la direction donnée par la flèche référencée G sur la figure 5, peut être placée en travers de l'entaille et ressortir par l'autre orifice 460b.

De retour aux figures 1 et 2, la cerce de maintien 5 constitue un élément du dispositif de gammagraphie 1 qui est indépendant du boîtier de collimation 2.

La cerce 5 a pour fonction principale de fixer la structure par rapport au boîtier de collimation, et par conséquent de définir une position fixe pour l'orifice de tir 10 par rapport à la surface de cette structure.

La cerce 5 comprend deux parties 50a, 50b présentant chacune un profil en forme de « C ».

Ces deux parties définissent ensemble une forme globalement annulaire s'étendant autour d'un axe de référence R, de façon à ceinturer une structure à analyser, par exemple de forme tubulaire.

La cerce présente ainsi une surface libre radialement intérieure par rapport à l'axe de référence, destinée à reposer au moins partiellement contre la surface de la structure à analyser.

Les parties en « C » présentent une épaisseur radiale comprise entre 2 et 10 millimètres.

La cerce comprend en outre un élément de liaison 51 mobile entre les deux parties 50a, 50b en « C ». Les deux parties en C sont par exemple reliées l'une à l'autre par un élément de liaison 51 de type charnière d'axe de pivot parallèle à l'axe de référence R.

Les deux parties 50a, 50b de la cerce sont constituées d'un matériau rigide tel que du métal.

Les deux parties en C présentent deux extrémités libres 500a, 500b en regard et distantes l'une de l'autre par un espace de taille variable en fonction de la position de la charnière 51.

La cerce comprend également une grenouillère 54 de fermeture montée sur les deux extrémités libres en regard, pour refermer la cerce sur elle-même.

La grenouillère 54 est mobile entre une position attachée et une position détachée.

Lorsque la grenouillère 54 est en position attachée, les deux parties 50a, 50b en « C », la charnière 51 et la grenouillère, et la grenouillère définissent ensemble un périmètre fermé autour de l'axe de référence R. Dans la position attachée, la cerce 5 peut alors être maintenue fixe sur une structure ceinturée par ce périmètre.

Lorsque la grenouillère 54 est en position ouverte, les deux extrémités 500a, 500b en regard des deux parties en « C » peuvent être écartées l'une de l'autre par pivotement de la charnière 51.

En référence à la **figure 5**, la grenouillère 54 comprend un levier 540 monté mobile par rapport à l'une des parties de forme en « C » (ici la partie 50a), et une tête d'attache 542 à l'autre partie 50b de forme en « C », la tête d'attache 542 étant montée mobile par rapport au levier 540.

La tête d'attache 542 est terminée par une boucle adaptée pour entourer un pion faisant radialement saillie par rapport à l'axe de référence R, depuis l'extrémité 500b.

La tête d'attache 542 est reliée au levier 540 par un système vis-écrou permettant d'ajuster la distance entre la tête et le levier. Dans le mode de réalisation de grenouillère 54 partiellement illustré sur la figure 2 pour plus de lisibilité, ce système vis-écrou comprend un premier écrou 543 mobile en rotation sur la tête d'attache 542, un deuxième écrou 544 monté mobile en rotation sur le levier (selon un axe parallèle à l'axe de rotation du levier par rapport à la partie 50a en « C »), et une vis 545 qui coopère avec chacun des deux écrous.

Une rotation de la vis 545 par rapport à l'un et/ou l'autre des écrous 543, 544 permet de faire varier la distance entre les deux écrous 543 et 544, donc la distance entre la tête d'attache et le levier, et par conséquent faire varier l'espace défini par la grenouillère entre les deux extrémités 500a et 500b des deux parties en « C », en vis-à-vis l'une de l'autre. Des structures à analyser de diamètres différents peuvent de la sorte être solidement enserrées par la cerce 5.

Les deux parties 50a, 50b définissent ensemble une surface radialement extérieure 53 de la cerce 5.

La cerce 5 comprend en outre une pluralité d'éléments de fixation 52 faisant saillie radialement depuis la surface extérieure 53 par rapport à l'axe de référence R. Chaque élément de fixation 53 est solidaire de l'une ou l'autre des parties 50a ou 50b de la cerce 5.

Les éléments de fixation 53 sont répartis autours de la cerce 5 en des positions angulaires prédéterminées et différentes de la cerce 5.

La distance curviligne qui sépare deux éléments de fixation adjacents lorsque l'on parcourt successivement les parties 50a, 50b depuis l'extrémité libre 500a jusqu'à l'extrémité libre 500b peut être constante.

Bien entendu, l'espace qui sépare les deux extrémités libres 500a et 500b en regard est de dimension variable, en raison de la longueur variable de la grenouillère 54. On comprend néanmoins qu'il existe une longueur de la grenouillère 54 qui permet de définir une position fermée de la cerce 5 dans laquelle l'écart angulaire entre chaque paire d'éléments de fixation adjacents vaut 2π/N.

Le nombre N d'éléments de fixation 52 est adaptable en fonction des applications. Pour les plus courantes il est égal à 2, 3, 4, 5 ou 6. La figure 52 illustre un mode de réalisation dans lequel N est égal à 4.

Chaque élément de fixation présente une forme adaptée pour être reçue au moins partiellement dans l'entaille 40.

Chaque élément de fixation comprend deux côtés latéraux opposés 521 et 522, et est percé par un passage traversant 520 qui débouche dans les deux côtés opposés 521 et 522.

Le passage traversant 520 s'étend sensiblement tangentiellement par rapport à la surface radialement extérieure 53 de la cerce 5.

Les deux côtés 521 et 522 opposés sont par exemple plans, conférant à l'élément 52 une forme en muret. D'autres formes en saillie peuvent également être envisagées pour les éléments de fixation 52, par exemple une forme de pion.

Chaque élément de fixation 52 est orienté sur la cerce 5 de sorte que les deux côtés 521 et 522 de chaque élément de fixation 52 s'étendent parallèlement à l'axe de référence R autour duquel s'étend la cerce 5.

Lorsque l'un quelconque des éléments de fixation 52 est reçu dans l'entaille 40, chaque côté 521, 522 de cet élément de fixation 52 se trouve en regard d'une des deux branches définissant l'entaille 40.

La largeur de chaque élément de fixation 52, mesurée entre ses deux côtés opposés 521 et 522, est égale ou sensiblement égale à l'espace laissé par l'entaille 40 entre les deux branches 422a et 422b de la platine 4.

De la sorte, lorsqu'un élément de fixation 52 est reçu dans l'entaille 40, son côté 521 se trouve plaqué contre la branche 422a de la platine 4, et son côté 522 se trouve plaqué contre la branche 422b de la platine 4.

Le passage traversant 45 formé dans la platine 4 et qui coupe l'entaille 40, et le passage traversant 520 formé à travers chaque élément de fixation 52 sont agencés pour être alignés lorsque l'un quelconque des éléments de fixation 52 est reçu dans l'entaille 40.

De préférence, les passages 45 et 520 sont agencés pour être alignés lorsque l'élément de fixation 52 vient en butée contre le fond de l'entaille 40 formé par l'embase 420.

Les passages 45 et 520 sont préférentiellement agencés pour être alignés lorsque la surface radialement extérieure 53 de la cerce repose contre la surface libre 42 de la platine 4.

En référence à la **figure 6**, le dispositif 1 de gammagraphie comprend également une goupille de blocage 7 de la platine 4 avec un élément de fixation 52 de la cerce 5.

La goupille 7 comprend une partie proximale de préhension 70, par exemple en forme de poignée, et une partie distale formant une tige 71 terminée par une extrémité libre 72.

La tige 71 est solidaire de la partie de préhension 70.

La tige 71 est de section adaptée pour être insérée dans le passage traversant 45 de la platine via l'un ou l'autre des orifices 460a, 460b formés dans les côtés latéraux de la platine 4.

La tige 71 est de plus de section adaptée pour être insérée dans le passage 520 de chacun des éléments de fixation 52.

La partie de préhension 70 est de section d'aire supérieure à la section de la tige 71.

La goupille 7 présente ainsi un épaulement 73 défini par le changement d'aire de section entre la partie de préhension 70 et la tige 71, cet épaulement 73 définissant ainsi une butée limitant la course d'insertion de la tige 71 dans le passage 45 formé dans la platine 4.

Dans le mode de réalisation de goupille illustré, la partie de préhension forme une poignée d'axe sécant avec l'axe de la tige 71.

La goupille 7 comprend par ailleurs des moyens de blocage de la tige par rapport à la platine 4, lorsque la tige 71 est passée à travers le passage coupant l'entaille 40.

Les moyens de blocage comprennent au moins une bille 74 mobile entre une position dans laquelle la bille 74 est rétractée dans le corps de la tige, et une position dans laquelle la bille fait saillie par rapport au corps de la tige, transversalement à l'axe de la tige 71.

La goupille de blocage 7 illustrée en figure 6 comprend par exemple deux billes 74 opposées par rapport au corps de la tige 71.

La longueur de la tige 71 est supérieure à la longueur du passage 45 traversant la platine entre les côtés 46a et 46b. Cette longueur est de plus suffisante pour que, lorsque l'épaulement 73 vient en butée contre un côté latéral de la platine (par exemple le côté 46a), chaque bille 74 rétractable dépasse hors de la platine 4 par l'autre côté latéral (le côté latéral 46b).

Les moyens de blocage comprennent en outre un bouton d'actionnement 75 formé dans la partie de préhension 70, ainsi qu'un mécanisme d'actionnement reliant le bouton 75 aux billes 74 logé à l'intérieur du corps de la tige 71 (non visible sur la figure 5).

Le mécanisme d'actionnement est adapté pour rétracter chaque bille 74 dans le corps tige 71 en réponse à un appui sur le bouton 75, et pour rappeler chaque bille 74 vers sa position en saillie lorsque le bouton 75 est relâché. Le mécanisme d'actionnement peut par exemple comprendre un moyen de rappel tel qu'un ressort pour solliciter la bille vers sa position en saillie lorsqu'aucune pression n'est exercée sur le bouton.

La goupille de blocage 7, la platine 4 et chaque élément de fixation 52 forment ensemble des moyens de fixation amovible du boîtier de collimation 2 à la cerce de maintien 5.

Les différents éléments de fixation 52, agencés en des positions différentes prédéterminées sur la cerce 5, permettent donc de définir une pluralité de positions différentes de l'orifice de tir 20 en regard de la surface d'une structure à analyser, lorsque cette structure est enserrée par la cerce 5 et que le boîtier de collimation 2 est fixé à la cerce 5.

Il va maintenant être détaillé des étapes pour fixer le dispositif de gammagraphie 1 sur une structure devant être analysée.

### A) Fixation de la cerce de maintien à une structure à analyser

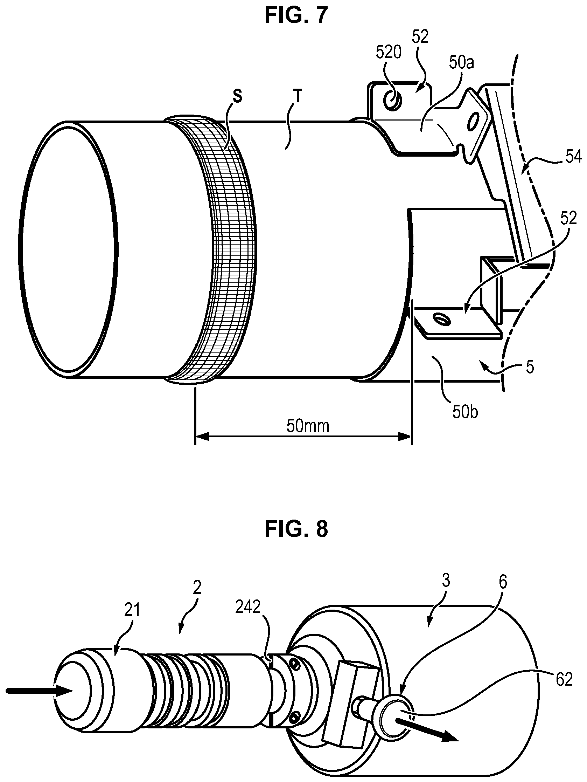

En référence à la **figure 7**, une canalisation T par exemple de forme tubulaire comprend en sa surface un cordon de soudure S à analyser. Le cordon de soudure S s'étend sur toute ou partie du pourtour de la canalisation T.

Un opérateur fait passer le corps de la canalisation T dans l'espace défini entre les corps 50a et 50b de la cerce. L'opérateur peut, pour ce faire, écarter les deux extrémités libres 500a et 500b l'une de l'autre d'une distance supérieure au diamètre de la canalisation T par pivotement de la liaison 51.

L'opérateur positionne la cerce de maintien 5 à une distance (mesurée suivant l'axe de référence R) environ égale à 50 mm par rapport au cordon de soudure S.

L'opérateur configure la grenouillère 54 dans sa position attachée en positionnant la boucle formée à l'extrémité de la tête d'attache 542 autour du pion localisé en l'extrémité 500b de la partie 50b.

L'opérateur peut également régler le diamètre global de la cerce 5 de maintien par rotation de la vis 545 à une valeur de diamètre permettant d'obtenir un serrage suffisant de la structure par la cerce 5 et ainsi faire en sorte que la canalisation T soit solidement maintenue fixe par rapport à la cerce 5.

### B) Fixation de l'embout d'irradiation au boîtier de collimation

En référence à la **figure 8**, l'opérateur se saisit de l'embout d'irradiation 2 par sa partie de préhension 21.

L'opération positionne l'extrémité libre de la partie distale 22 où est formé l'orifice 23 à proximité de l'orifice d'entrée 31 formé sur le boîtier de collimation 3.

De son autre main laissée libre, l'opérateur tire sur la partie de préhension 62 du verrou 6 de sorte à ce que la tige du verrou 6 ne fasse pas saillie dans logement d'insertion de l'embout d'irradiation 2 formé dans le boîtier de collimation 3.

L'opérateur insère la partie distale 22 de l'embout d'irradiation 2 dans ce logement, via l'orifice d'entrée 31, jusqu'à ce que la collerette 242 vienne en butée contre le boîtier de collimation 3. La cavité 240 formée sur la surface radicalement extérieure de la bague de blocage 24 se trouve alors à l'intérieur du logement d'insertion et plus précisément en vis-à-vis de l'extrémité libre de la tige du verrou 6.

L'opérateur positionne ensuite le verrou 6 dans sa position rétractée en poussant la partie de préhension 62 du verrou 6 vers le logement d'insertion (ou en relâchant simplement la partie de préhension 62 si le verrou 6 est muni d'un moyen de rappel vers sa position rétractée en saillie dans le logement d'insertion).

Dans la position rétractée du verrou 6, l'extrémité libre de la tige est reçue dans la cavité 240 de la bague de blocage 24 insérée dans le logement d'insertion. L'embout d'irradiation 2 se trouve alors bloqué longitudinalement par le verrou 6 dans le logement d'insertion formé dans le boîtier de collimation 3.

### C) Fixation du boîtier de collimation à la cerce de maintien

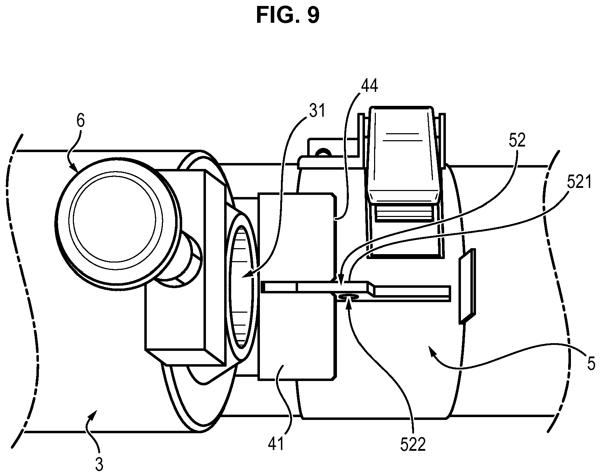

En référence à la **figure 9**, l'opérateur se saisit du boîtier de collimation 3 et approche la surface libre 42 de la platine 4 en regard de la canalisation T.

L'opérateur oriente la platine 4 au droit par rapport à un premier élément de fixation 52 faisant saillie sur la surface radialement extérieure de la cerce de maintien 5.

L'opérateur insère le premier élément de fixation 52 dans l'entaille 40 selon une direction sensiblement parallèle à l'axe de référence R et à la surface libre 42 par le côté latéral 44 jusqu'à ce que l'élément de fixation vienne en butée contre l'embase 420 de la platine 4. Le passage traversant 520 formé entre les côtés opposés 521 et 522 de l'élément de fixation 52 se trouve alors aligné avec le passage 45 formé en travers des branches 422a, 422b de la platine en forme de U.

La forme des éléments de fixation permet de positionner coaxialement les deux passages 45 et 520 dans l'entaille 40.

A l'aide de sa main libre, l'opérateur se saisit de la goupille de blocage 7 par sa partie de préhension 70. Il positionne l'extrémité 72 de la tige 71 à proximité de l'orifice 460a formé dans le côté latéral 46a de la platine 4.

L'opérateur appuie sur le bouton d'actionnant 75 avec son pouce, qui a pour effet de rétracter la ou les billes 74 à l'intérieur de la tige 71.

L'opérateur fait passer la tige 71 à travers le passage 45 interrompu par l'entaille 40, et à travers le passage 520 formé dans l'élément de fixation 52 reçu dans l'entaille et aligné avec le passage 45.

Lorsque l'épaulement 73 de la goupille 7 vient en butée contre la surface du côté 46a de la platine 4, une portion d'extrémité de la tige 71 comprenant l'extrémité libre 72 et les billes 74 ressort de la platine 4 par l'orifice 460b formé dans le côté latéral 46b.

L'opérateur relâche le bouton d'actionnement 75, ayant pour effet de positionner les billes 74 dans leur position en saillie par rapport au corps de la tige 71 et ainsi bloquer la goupille 7 en travers des passages traversant 45 et 520 suivant la direction de l'axe de la tige 71.

Le boîtier de collimation 3 est alors fixé à la cerce de maintien 5 au moyen de la platine 4, de la goupille 7, et de l'élément de fixation 52. Dans cette position, l'orifice de tir 10 formé dans l'embase 420 de la platine 4 se trouve en regard de la canalisation T enserrée par la cerce de maintien 5 et plus précisément en regard du cordon de soudure S à distance de la cerce de maintien 5.

Le dispositif 1 de gammagraphie est à présent prêt pour l'examen de ce cordon de soudure S.

Bien entendu, la fixation de la cerce de maintien à une structure à analyser (A), la fixation de l'embout d'irradiation au boîtier de collimation (B), et la fixation du boîtier de collimation à la cerce de maintien (C) peuvent être mises en œuvre dans n'importe quel ordre.

On note que lorsque le dispositif 1 est fixé à la structure T, l'orifice 10 de tir n'est distant de la surface T que d'une distance réduite qui correspond à l'épaisseur radiale de la cerce de maintien 5.

Les risques d'atteinte d'un opérateur par des rayons ionisants émis par l'orifice de tir sont donc significativement réduits par rapport à ceux rencontré lors de l'utilisation d'un dispositif de gammagraphie non fixé à la structure qu'il doit analyser.

### D) Examen gammagraphique de la structure enserrée par la cerce

La source 20 logée dans l'embout d'irradiation génère un rayonnement ionisant, par exemple un rayonnement gamma.

Le rayonnement ionisant généré est émis par l'orifice 23 inséré dans le logement d'insertion formée dans le boîtier de collimation 2 via l'orifice 31.

Le rayonnement est dirigé vers le collimateur 30 contenu dans le boîtier de collimation 3.

Le collimateur 30 focalise le rayonnement ionisant en provenance de l'orifice 31 en un faisceau focalisé de rayons ionisants qu'il redirige vers l'orifice de tir 10.

Les écrans absorbants 34 formés dans les parois du boîtier de collimation 3 permettent d'éviter la sortie de ces rayons à travers les parois du boîtier de collimation 3.

Le faisceau focalisé de rayons ionisant sort du boîtier de collimation 3 par l'orifice de tir 10 en regard du cordon de soudure S.

Ce faisceau focalisé atteint la surface du cordon de soudure S, pénètre le cordon de soudure avant d'être projeté sur un film radiographique.

Une fois l'analyse terminée, l'opérateur retire la goupille de blocage 7 hors des passages traversant 45 et 520 en appuyant sur le bouton d'actionnement 75. L'opérateur attache ensuite la platine 41 à un deuxième élément de fixation de la structure, positionnés à une deuxième position angulaire différente de celle de l'élément de fixation précédent par rapport à l'axe de référence R, au moyen de la goupille de blocage 7 et selon les étapes décrites précédemment.

Le deuxième élément de fixation 52 permet de positionner l'orifice de tir 10 en regard d'une autre portion du cordon de soudure S.

L'examen gammagraphique est alors répété dans cette deuxième position angulaire.

Le repositionnement du boîtier 3 en la deuxième position angulaire est de préférence effectué pendant que la cerce de maintien 5 est fixée à la structure T. De la sorte, il est garanti un écart angulaire prédéterminé entre plusieurs tirs successifs via l'orifice de tir 10.

Les étapes qui précèdent peuvent être répétées autant de fois qu'il existe de éléments de fixation 52 sur la cerce de maintien 5, de façon à caractériser plusieurs emplacements du cordon de soudure S et ainsi récupérer suffisamment d'informations sur son état.

## Revendications

1. Dispositif (1) de gammagraphie comprenant :
• un boîtier (3) présentant un orifice de tir (10) pour émettre à l'extérieur du boitier (3) un rayonnement ionisant,
• une cerce (5) de maintien pour enserrer une structure (T) à analyser,
• des moyens de fixation amovible du boîtier (3) à la cerce (5) comprenant plusieurs éléments de fixation (52) pour fixer le boîtier (3) en des positions angulaires prédéterminées et différentes autour de la cerce (5), l'orifice de tir (10) étant agencé pour diriger le rayonnement ionisant sur la structure (T) lorsqu'elle est enserrée par la cerce (5) et que le boîtier (3) est fixé à la cerce (5) par un des éléments de fixation,
le dispositif (1) étant **caractérisé par** :
• les éléments de fixation (52) faisant saillie depuis une surface radialement extérieure de la cerce (5),
• les moyens de fixation comprenant en outre :
∘ une platine (4) solidaire du boîtier (3) comprenant une entaille (40) pour recevoir l'un quelconque des éléments (52) en saillie,
∘ un élément de blocage (7) de la platine (4) par rapport à l'élément (52) en saillie reçu dans l'entaille (40), et où
• au moins un des éléments en saillie (52) comprend un passage (520) traversant,
• la platine (4) comprend un passage (45) traversant interrompu par l'entaille (40) et agencé pour être aligné avec le passage (45, 520) traversant de l'élément en saillie (52) lorsque cet élément (52) est reçu dans l'entaille (40),
• l'élément de blocage de la platine (4) par rapport à l'élément en saillie (52) est une goupille (7) comprenant une tige (71) adaptée pour traverser les passages (45, 520) alignés de la platine (4) et de l'élément de fixation (52) lorsque cet élément (52) est reçu dans l'entaille (40).

2. Dispositif (1) selon la revendication précédente, dans lequel la goupille (7) comprend au moins une bille (74) mobile entre :
• une position rétractée dans la tige (71), et
• une position en saillie par rapport à la tige (71) dans laquelle la bille (74) bloque la tige en travers du passage (45, 520) de la platine (4).

3. Dispositif (1) selon l'une des revendications précédentes, dans lequel la goupille (7) comprend en outre un mécanisme d'actionnement de la bille comprenant un bouton (75), et adapté pour :
• rétracter la bille (74) dans la tige en réponse à un appui sur le bouton (75),
• solliciter la bille (74) vers sa position en saillie lorsque le bouton (74) n'est pas appuyé.

4. Dispositif (1) selon la revendication précédente, dans lequel le bouton est formé sur une partie de préhension (74) de la goupille (7).

5. Dispositif (1) selon l'une des revendications précédentes, dans lequel chaque élément de fixation (52) présente deux côtés opposés (521, 522) s'étendant parallèlement à un axe de référence (R) autour duquel s'étend la cerce (5), le passage traversant (520) de l'élément de fixation (52) débouchant dans les deux côtés opposés (521, 522).

6. Dispositif (1) selon l'une des revendications précédentes, dans lequel l'écart de position angulaire entre chaque paire d'éléments de fixation (52) adjacents est constant.

7. Dispositif (1) selon l'une des revendications précédentes, dans lequel les éléments de fixation (52) sont au nombre de deux à huit.

8. Dispositif (1) selon l'une des revendications précédentes, dans lequel la cerce (5) présente et comprend :
• deux parties (50a, 50b) définissant ensemble une forme globalement annulaire, et
• une liaison articulée (51) entre les deux parties (50a, 50b).

9. Disposition selon l'une des revendications précédentes, dans lequel les deux parties (50a, 50b) sont en métal.

10. Dispositif (1) selon l'une des revendications 8 et 9, dans lequel la cerce (5) comprend en outre une grenouillère (54) d'attache de l'une des parties (50a) à l'autre partie (50b).

11. Dispositif (1) selon la revendication précédente, dans lequel la grenouillère (54) comprend un levier (540) monté mobile par rapport à l'une des parties de support (50a), et une tête d'attache (542) à l'autre partie de support montée mobile par rapport au levier (542), la tête d'attache (542) étant de longueur réglable.

12. Dispositif (1) selon l'une des revendications précédentes, dans lequel le boîtier (3) comprend au moins un écran (33) contre le rayonnement ionisant.

13. Procédé de gammagraphie mis en œuvre au moyen d'un dispositif selon l'une des revendications précédentes, comprenant des étapes de :
• fixation de la cerce de maintien (5) autour d'une structure à analyser,
• fixation, au moyen d'un des éléments de fixation (52), du boîtier (3) à la cerce (5) en une position angulaire prédéterminée autour de la cerce,
• émission via l'orifice de tir (10) d'un rayonnement ionisant généré par une source (20) vers la surface de la structure fixée à la cerce (5), alors que le boîtier (3) est fixé à la cerce (5) en la position angulaire prédéterminée,
les étapes de fixation du boîtier (3) à la cerce (5) et d'émission étant répétées pour plusieurs positions angulaires prédéterminées différentes autour de la cerce (5).

## Patentansprüche

1. Vorrichtung (1) für Gammagraphie, umfassend:
• ein Gehäuse (3), das eine Schussöffnung (10) zum Emittieren einer ionisierenden Strahlung nach außerhalb des Gehäuses (3) aufweist,
• einen Haltering (5) zum Einspannen einer zu analysierenden Struktur (T),
• Mittel zur lösbaren Befestigung des Gehäuses (3) am Ring (5), mehrere Befestigungselemente (52) zum Befestigen des Gehäuses (3) in vorbestimmten und unterschiedlichen Winkelpositionen um den Ring (5) herum umfassend, wobei die Schussöffnung (10) angeordnet ist, um die ionisierende Strahlung auf die Struktur (T) zu richten, wenn sie durch den Ring (5) eingespannt ist, und das Gehäuse (3) durch eines der Befestigungselemente am Ring (5) befestigt ist,
wobei die Vorrichtung (1) **gekennzeichnet ist durch**:
• die Befestigungselemente (52), die aus einer radial äußeren Oberfläche des Ringes (5) hervorstehen,
• die Befestigungsmittel, die weiter umfassen:
∘ eine Platine (4), die fest an dem Gehäuse (3) befestigt ist, eine Kerbe (40) zum Aufnehmen irgendeines der hervorstehenden Elemente (52) umfassend,
∘ ein Blockierelement (7) der Platine (4) in Bezug auf das hervorstehende Element (52), das in der Kerbe (40) aufgenommen ist, und wo
• mindestens eines der hervorstehenden Elemente (52) einen durchgehenden Durchlass (520) umfasst,
• die Platine (4) einen durchgehenden Durchlass (45) umfasst, der **durch** die Kerbe (40) unterbrochen ist und der angeordnet ist, um mit dem durchgehenden Durchlass (45, 520) des hervorstehenden Elements (52) ausgerichtet zu sein, wenn dieses Element (52) in der Kerbe (40) aufgenommen ist,
• das Blockierelement der Platine (4) in Bezug auf das hervorstehende Element (52) ein Splint (7) ist, der einen Stift (71) umfasst, der angepasst ist, um die ausgerichteten Durchlässe (45, 520) der Platine (4) und des Befestigungselements (52) zu durchqueren, wenn dieses Element (52) in der Kerbe (40) aufgenommen ist.

2. Vorrichtung (1) nach dem vorstehenden Anspruch, wobei der Splint (7) mindestens eine Kugel (74) umfasst, die mobil ist zwischen:
• einer eingezogenen Position in dem Stift (71), und
• einer in Bezug auf den Stift (71) hervorstehenden Position, in der die Kugel (74) den Stift durch den Durchlass (45, 520) der Platine (4) hindurch blockiert.

3. Vorrichtung (1) nach einem der vorstehenden Ansprüche, wobei der Splint (7) weiter einen Betätigungsmechanismus der Kugel umfasst, der einen Knopf (75) umfasst, und angepasst ist zum:
• Einziehen der Kugel (74) in den Stift als Reaktion auf einen Druck auf den Knopf (75),
• Schieben der Kugel (74) in ihre hervorstehende Position, wenn der Knopf (74) nicht gedrückt ist.

4. Vorrichtung (1) nach dem vorstehenden Anspruch, wobei der Knopf auf einem Greifteil (74) des Splints (7) gebildet ist.

5. Vorrichtung (1) nach einem der vorstehenden Ansprüche, wobei jedes Befestigungselement (52) zwei entgegengesetzte Seiten (521, 522) aufweist, die sich parallel zu einer Referenzachse (R) erstrecken, um die sich der Ring (5) erstreckt, wobei der durchgehende Durchlass (520) des Befestigungselements (52) in die beiden entgegengesetzten Seiten (521, 522) mündet.

6. Vorrichtung (1) nach einem der vorstehenden Ansprüche, wobei die Winkelpositionsabweichung zwischen jedem Paar an benachbarten Befestigungselementen (52) konstant ist.

7. Vorrichtung (1) nach einem der vorstehenden Ansprüche, wobei die Befestigungselemente (52) zwei bis acht an der Zahl sind.

8. Vorrichtung (1) nach einem der vorstehenden Ansprüche, wobei der Ring (5) Folgendes aufweist und umfasst:
• zwei Teile (50a, 50b), die gemeinsam eine im Allgemeinen kreisförmige Form definieren, und
• eine gelenkige Verbindung (51) zwischen den beiden Teilen (50a, 50b).

9. Anordnung nach einem der vorstehenden Ansprüche, wobei die beiden Teile (50a, 50b) aus Metall sind.

10. Vorrichtung (1) nach einem der Ansprüche 8 und 9, wobei der Ring (5) weiter einen Schnallenverschluss (54) zum Anbringen eines der Teile (50a) an dem anderen Teil (50b) umfasst.

11. Vorrichtung (1) nach dem vorstehenden Anspruch, wobei der Schnallenverschluss (54) einen Hebel (540) umfasst, der in Bezug auf einen der Trägerteile (50a) mobil montiert ist, und einen Anbringungskopf (542) an dem anderen Trägerteil, der in Bezug auf den Hebel (542) mobil montiert ist, wobei der Anbringungskopf (542) von einstellbarer Länge ist.

12. Vorrichtung (1) nach einem der vorstehenden Ansprüche, wobei das Gehäuse (3) mindestens einen Schirm (33) gegen die ionisierende Strahlung umfasst.

13. Gammagraphie-Verfahren, das anhand einer Vorrichtung nach einem der vorstehenden Ansprüche umgesetzt wird, die folgenden Schritte umfassend:
• Befestigen des Halterings (5) um eine zu analysierende Struktur,
• Befestigen des Gehäuses (3) an dem Ring (5) anhand eines der Befestigungselemente (52) in einer vorbestimmten Winkelposition um den Ring,
• Emittieren über die Schussöffnung (10) einer ionisierenden Strahlung, die durch eine Quelle (20) generiert wird, zur Oberfläche der am Ring (5) befestigen Struktur, während das Gehäuse (3) in der vorbestimmten Winkelposition an dem Ring (5) befestigt ist,
wobei die Schritte des Befestigens des Gehäuses (3) am Ring (5) und des Emittierens in mehreren unterschiedlichen, vorbestimmten Winkelpositionen um den Ring (5) herum wiederholt werden.

## Claims

1. A gammagraphy device (1) comprising:
- a housing (3) having a firing orifice (10) for emitting an ionising radiation out of the housing (3),
- a holding hoop (5) for enclosing a structure (T) to be analysed,
- means for removably fastening the housing (3) to the hoop (5) comprising several fastening elements (52) for fastening the housing (3) in predetermined and different angular positions around the hoop (5), the firing orifice (10) being arranged to direct the ionising radiation on the structure (T) when it is enclosed by the hoop (5) and the housing (3) is fastened to the hoop (5) by one of the fastening elements,
the device (1) being **characterised by**:
- the fastening elements (52) projecting from a radially outer surface of the hoop (5),
- the fastening means further comprising:
- a plate (4) secured to the housing (3) comprising a notch (40) to receive any one of the projecting elements (52),
- an element (7) for blocking the plate (4) relative to the projecting element (52) received in the notch (40), and where
- at least one of the projecting elements (52) comprises a through passage (520),
- the plate (4) comprises a through passage (45) interrupted by the notch (40) and arranged to be aligned with the through passage (45, 520) of the projecting element (52) when this element (52) is received in the notch (40),
- the element for blocking the plate (4) relative to the projecting element (52) is a pin (7) comprising a rod (71) adapted to pass through the aligned passages (45, 520) of the plate (4) and of the fastening element (52) when this element (52) is received in the notch (40).

2. The device (1) according to the preceding claim, wherein the pin (7) comprises at least one ball (74) movable between:
- a retracted position in the rod (71), and
- a projecting position relative to the rod (71) wherein the ball (74) blocks the rod across the passage (45, 520) of the plate (4).

3. The device (1) according to one of the preceding claims, wherein the pin (7) further comprises a ball actuation mechanism comprising a button (75), and adapted for:
- retracting the ball (74) in the rod in response to pressing the button (75),
- urging the ball (74) towards its projecting position when the button (74) is not pressed.

4. The device (1) according to the preceding claim, wherein the button is formed on a gripping portion (74) of the pin (7).

5. The device (1) according to one of the preceding claims, wherein each fastening element (52) has two opposite sides (521, 522) extending parallel to a reference axis (R) around which extends the hoop (5), the through passage (520) of the fastening element (52) opening into both opposite sides (521, 522).

6. The device (1) according to one of the preceding claims, wherein the difference in angular position between each pair of adjacent fastening elements (52) is constant.

7. The device (1) according to one of the preceding claims, wherein the fastening elements (52) are two to eight in number.

8. The device (1) according to one of the preceding claims, wherein the hoop (5) has and comprises:
- two portions (50a, 50b) defining together a generally annular shape, and
- an articulated connection (51) between the two portions (50a, 50b).

9. An arrangement according to one of the preceding claims, wherein the two portions (50a, 50b) are made of metal.

10. The device (1) according to one of claims 8 and 9, wherein the hoop (5) further comprises a toggle latch (54) for attaching one of the portions (50a) to the other portion (50b).

11. The device (1) according to the preceding claim, wherein the toggle latch (54) comprises a lever (540) movably mounted relative to one of the support portions (50a), and a head (542) for attachment to the other support portion movably mounted relative to the lever (542), the attachment head (542) being of adjustable length.

12. The device (1) according to one of the preceding claims, wherein the housing (3) comprises at least one screen (33) against ionising radiation.

13. A gammagraphy method implemented by means of a device according to one of the preceding claims, comprising steps of:
- fastening the holding hoop (5) around a structure to be analysed,
- fastening, by means of one of the fastening elements (52), the housing (3) to the hoop (5) in a predetermined angular position around the hoop,
- emitting via the firing orifice (10) ionising radiation generated by a source (20) to the surface of the structure fastened to the hoop (5), while the housing (3) is fastened to the hoop (5) in the predetermined angular position,
the steps of fastening the housing (3) to the hoop (5) and of emission being repeated for several different predetermined angular positions around the hoop (5).
